(19) Europäisches Patentamt / European Patent Office / Office européen des brevets

(11) **EP 2 782 273 B1**

(12) **EUROPEAN PATENT SPECIFICATION**

(45) Date of publication and mention of the grant of the patent:
**03.05.2017 Bulletin 2017/18**

(51) Int Cl.:
***H04J 3/06*** *(2006.01)*

(21) Application number: **13305341.3**

(22) Date of filing: **21.03.2013**

(54) **Scheduling of data bursts in a burst switching communication network**

Zeitplanung von Daten-Bursts in einem Burst-Switching-Kommunikationsnetzwerk

Programmation de rafales de données dans un réseau de communication à commutation par rafales

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.09.2014 Bulletin 2014/39**

(73) Proprietor: **ALCATEL LUCENT**
**92100 Boulogne-Billancourt (FR)**

(72) Inventors:
• **Cazzaniga, Giorgio**
**23804 Monte Marenzo (IT)**
• **Hermsmeyer, Christian**
**90542 Eckental (DE)**
• **Widjaja, Indra**
**Roseland, NJ New Jersey 07068 (US)**

(74) Representative: **Wetzel, Emmanuelle et al**
**Alcatel-Lucent**
**Intellectual Property Business Group**
**70430 Stuttgart (DE)**

(56) References cited:
**EP-A1- 1 473 961     EP-A1- 1 608 112**
**EP-A2- 1 063 801     US-A1- 2006 239 285**

**Description**

**Technical field**

The present invention generally relates to the field of communication networks, in particular of optical communication networks. More in particular, the present invention relates to the scheduling of the transmission of data bursts in an optical burst switching network.

**Background art**

Optical Burst Switching (OBS) is a technique which is known in the art for supporting bursty traffic in an optical network. See "Optical Burst Switching (OBS) - A new paradigm for an optical Internet", C. Qiao, M. Yoo, Journal High Speed Networks, vol. 8, pp. 69-84, 1999.

According to optical burst switching, data units provided by a number of clients are assembled into data bursts at a source node of the optical network and the data bursts are then propagated through the network. In a known optical burst switching network, each data burst comprises a header and a payload including the clients' data units. The payload of one single data burst may comprise one data unit, a fraction of a data unit or number of data units. Data units may belong to different types of data traffic. In particular, data units may belong to a constant bit rate traffic flow, such as a voice or video traffic flow, or to a packet traffic flow having a variable and possibly unpredictable bit rate, such as a packet traffic flow related to file transfers, e-mail exchange, loading of web pages and on the like. Data units may then comprise IP (Internet Protocol) or Ethernet packets, ATM (Asynchronous Transfer Mode) cells as well as SONET or SDH (Synchronous Digital Hierarchy) frames. Each data burst is transmitted within the optical network and terminated at a respective destination node. Each data burst, once processed by the respective destination node, is then disassembled for recovering the data units contained therein.

Typically, in an optical burst switching network, collisions among data bursts propagating along different paths within the optical network and destined to the same node may arise. Indeed, when data bursts from two or more source nodes of the optical network arrive at the destination node at arrival times which are not separated by an integer multiple of a data burst duration, such data bursts may overlap. Optical buffers in the form of fiber delay lines of predetermined length are available but they provide limited capabilities in compensating variable delays of the data bursts.

US 7,283,552 discloses a Time-Domain Wavelength Interleaved Network (TWIN) architecture. According to this architecture, origin nodes transmit intermittently through, e.g., tunable lasers to each of various destination nodes. Each transmission to a given destination node is made in one assigned wavelength channel regardless of the node at which the transmission originated. Each burst is carried by one timeslot, and a number of timeslots are packed into a repetitive cycle.

Routing is determined by the wavelength assignments and by a preassigned graph for each assigned wavelength, referred to as a "tree" which specifies the sequence of links to be traversed from each origin node to the destination node assigned to that wavelength. The bursts are scheduled in such a way as to prevent bursts from disparate origins from colliding at a common destination. In particular, a network scheduler is provided which assigns timeslots for the optical bursts in each wavelength channel from each source node. The timing is arranged so as to avoid collisions, i.e. to prevent bursts from distinct sources but in a common wavelength channel from overlapping on arrival at the destination node. The scheduling algorithm disclosed in US 7,283,552 is referred to as TWIN Iterative Independent Set (TIIS) algorithm. It has two inputs: a traffic demand matrix comprising a traffic demand Dij for each pair of source node (node i) and destination node (node j), in units of timeslots per cycle, and a delay matrix comprising a transmission delay dij for each pair of source node (node i) and destination node (node j). The transmission delay dij is, for each source node and destination node pair, a fixed propagation delay, which depends on the distance between the source node and the destination node, i.e. on the length of the fiber used to connect the source node and the destination node. Typically, this fixed propagation delay is computed by considering a reference signal at a given wavelength. A typical value of the propagation delay experienced by this reference signal propagating along a fiber is about 5 $\mu$s/km.

The TIIS scheduling algorithm comprises the following steps:

- determining one or more "feasible" node pairs (i, j) for timeslots of a finite sequence, a node pair (i, j) being feasible in a given timeslot (feasible node pair and timeslot combination) if a burst will neither start concurrently at the source node i with an already scheduled burst nor, taking the transmission delay dij into account, arrive concurrently at the destination node j with an already scheduled burst;
- selecting a timeslot from the finite sequence of timeslots;
- selecting one of the feasible node pairs (i, j) for that timeslot;
- scheduling the burst for the selected feasible node pair and timeslot combination;
- repeating the operations above until exhaustion of unscheduled demand or of feasible node pairs.

Selection of the timeslot and of the feasible node pair is performed by taking into account a weight. In particular, the selected feasible node pair and timeslot combination is that which has the greatest weight. This weight increases with the amount of unscheduled demand between the source node and the destination node of the feasible node pair, and varies inversely with a sum of unscheduled demands taken over those node pair and timeslot combinations that would be rendered unfeasible if the given node pair were scheduled in the given timeslot. The output of the TIIS algorithm is, for each source node, the time instants at which the data bursts may be sent to the other nodes of the network (i.e. the departure times of the data bursts), and, for each destination node, the time instants at which the data bursts arrive from the other nodes of the network (i.e. the arrival times of the data bursts), in order to avoid collisions.

## Summary of the invention

The optical signals propagating across an optical communication network are subject to chromatic dispersion. Chromatic dispersion causes, for each signal propagating at a specific wavelength, an additional delay with respect to the propagation delay experienced by the reference optical signal propagating between two nodes. While, for each node pair, the propagation delay between the source node and the destination node is mainly governed by travel time of light over the distance between the source node and the destination node, different wavelengths propagating between such nodes experience different additional delays caused by chromatic dispersion. Moreover, both the travel time of light, as well as the delay caused by chromatic dispersion, are subject to changes due to, e.g., temperature effects or ageing.

The inventors noticed that the delay matrix at the input of the TIIS algorithm disclosed in US 7,283,552 comprises only the values of the fixed propagation delays between the node pairs. Indeed, the transmission delay dij between source node i and destination node j may be expressed by the following equation:

$$d_{ij} = PD_{ij} \qquad\qquad [1]$$

where PDij is the fixed propagation delay between node i and node j.

Therefore, collisions may still happen under the implementation of the TIIS algorithm, since data bursts carried by optical signals at different wavelengths experience different additional delays, not foreseen by the TIIS algorithm, and may overlap at the destination node.

In principle, chromatic dispersion may be compensated by using a dispersion compensation module at each node of the optical communication network. However, providing a dispersion compensation module at each node of the optical network (i.e. installing one dispersion compensation module at each node and then managing it during the operation of the communication network) is disadvantageously costly.

Moreover, a dispersion compensation module may compensate a fixed value of chromatic dispersion. Changes in the chromatic dispersion, caused by variation of conditions such as temperature (day/night effects), pressure or ageing, may impact the experienced delay beyond the tolerance of such fixed dispersion compensation, causing collisions in the burst reception. However, adaptive dispersion compensation is even more costly compared with fixed dispersion compensation.

In view of the above, it is an object of the present invention to provide a method for scheduling data bursts in an optical network which allows taking into account the chromatic dispersion experienced by the optical signals propagating across the network, while avoiding using dispersion compensation modules.

In the following descriptions and in the claims, the expression "data burst" will refer to a burst of data exchanged between a source node and a destination node and belonging to a traffic flow to be sent from the source node to the destination node; the expression "dummy burst" will refer to a burst of data which does not belong to any specific traffic flow but is sent in order to establish/maintain continuity of the burst stream between two nodes; and the expression "burst" will refer indifferently to a data burst or a dummy burst.

Further, in the following descriptions and in the claims, the expression "source node" will designate any node within the communication network capable of transmitting at least one burst to another node of the communication network. A "destination node" on the other end is any node of the communication network capable of receiving at least one burst from a source node.

According to a first aspect, the present invention provides a method for scheduling the transmission of data bursts in a communication network, the communication network comprising a first source node, a second source node and a destination node, wherein the first source node is configured to send bursts to the destination node over a first wavelength within one or mode timeslots of a local scheduling period at the first source node and wherein the second source node is configured to send bursts to the destination node over a second wavelength within one or mode timeslots of a local scheduling period at the second source node, the method comprising:

a) at the first source node, time-stamping a first burst with a first timestamp information and, at the second source node, time-stamping a second burst with a second timestamp information;

b) at the destination node, evaluating a first time of arrival of the first burst, and a second time of arrival of the second burst;

c) at the destination node, computing a first transmission delay as a difference between the first time of arrival and the first timestamp information and a second transmission delay as a difference between the second time of arrival and the second timestamp information; and

d) computing a schedule for the transmission of the data bursts on the basis of the first transmission delay and the second transmission delay received from the destination node.

Preferably, the first wavelength is different from the second wavelength.

Preferably, step d) comprises applying a scheduling algorithm, wherein the scheduling algorithm is a TWIN iterative independent set algorithm.

Preferably, the schedule comprises times of departure of first data bursts from the first source node, times of departure of second data bursts from the second source node, and times of arrival of the first and second data bursts at the destination node.

According to an embodiment, at step a) the first burst and the second burst are dummy bursts, each of the first and second dummy bursts having a shorter duration than a data burst duration.

Preferably, the first source node, the second source node and the destination node have a respective clock, the clocks having the same frequency.

According to an embodiment, the first timestamp information is indicative of a time of departure of the first burst from the first source node with respect to a local time reference at the first source node, the second timestamp information is indicative of a time of departure of the second burst from the second source node with respect to a local time reference at the second source node and the first and second times of arrival are evaluated with respect to a local time reference at the destination node.

Preferably:

- the local time reference at the first source node is the starting time of a current local scheduling period at the first source node;
- the local time reference at the second source node is the starting time of a current local scheduling period at the second source node;
- each of the first and second timestamp information comprises al least two integer numbers:

  - a first integer number indicative of a time interval, in units of data burst duration, between the time of departure and the local time reference at the respective source node; and
  - a second integer number indicative of a further time interval, in units of period of a clock of the respective source node, between the time of departure and a starting time of a timeslot of the local scheduling period at the respective source node during which the first burst and second burst, respectively, is transmitted, and

- the local time reference at the destination node is the starting time of a current local scheduling period at the destination node.

Preferably, the method, further comprises:

e) at the first source node, time-stamping a subsequent further burst with a further timestamp information;

f) at the destination node, evaluating a further time of arrival of the further burst;

g) at the destination node, computing a further transmission delay as a difference between the further time of arrival and the further timestamp information;

h) at the destination node, evaluating whether a difference between the further transmission delay and the first transmission delay exceeds a threshold; and

i) in the affirmative, computing a further schedule on the basis of the further transmission delay.

Preferably, the threshold is a fraction of a guard interval comprised in the data burst duration.

According to a second aspect, the present invention provides a computer program product comprising computer-executable instructions for performing, when the program is run on at least one computer, the method as set forth above.

According to a third aspect, the present invention provides a destination node for a communication network, the destination node being configured to receive a first burst from a first source node of the communication network and a second burst from a second source node of the communication network, wherein the first source node is configured to send bursts to the destination node over a first wavelength within one or mode timeslots of a local scheduling period at the first source node and wherein the second source node is configured to send bursts to the destination node over a second wavelength within one or mode timeslots of a local scheduling period at the second source node, the destination node being configured to:

- evaluate a first time of arrival of the first burst, and a second time of arrival of the second burst;
- compute a first transmission delay as a difference between the first time of arrival and a first timestamp information comprised in the first burst and a second transmission delay as a difference between the second time of arrival and a second timestamp information comprised in the second burst.

According to a fourth aspect, the present invention provides a communication network comprising at least two source nodes and a destination node as set forth above.

Preferably, the communication network is an optical burst switching network.

## Brief description of the drawings

Embodiments of the invention will be better understood by reading the following detailed description, given by way of example and not of limitation, to be read with reference to the accompanying drawings, wherein:

- Figure 1 schematically shows a communication network;
- Figure 2 shows an exemplary burst and a scheme of a scheduling period;
- Figure 3 shows three time diagrams illustrating an operation of time-stamping the bursts at a source node and recovering their time of arrival at a destination node according to the present invention; and
- Figure 4 is a flow-chart illustrating the steps of the method according to the present invention.

## Detailed description of preferred embodiments of the invention

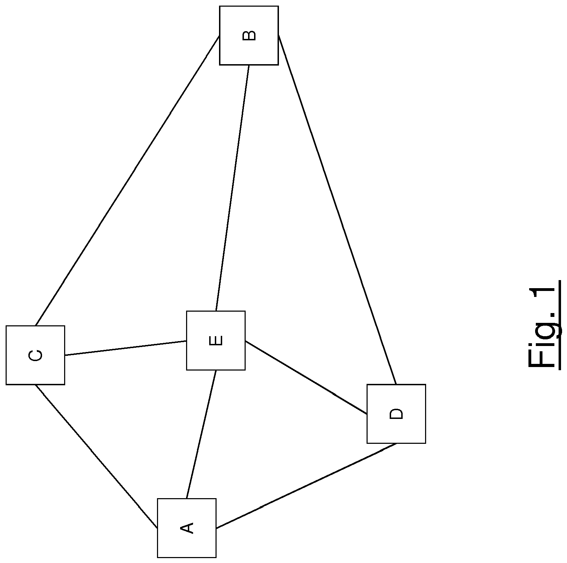

Figure 1 shows an exemplary communication network CN suitable for implementing the method according to the present invention. The communication network CN is an optical communication network. In particular, the communication network CN is an optical burst switching network. The communication network CN may be a metropolitan area network (MAN) interconnecting a number of clients, like, e.g., access networks and individual users. The communication network CN may transport different types of traffic, such as Ethernet traffic, IP traffic, ATM traffic, SDH or SONET traffic.

The exemplary communication network CN of Figure 1 comprises a number of nodes arranged according to an arbitrarily-connected mesh topology. The network CN of Figure 1 is merely exemplary as the method of the present invention may as well be implemented when other network topologies, such as multi-ring or single-ring topologies, are considered, or when a partially-connected mesh topology is considered.

By way of non limiting example, the communication network CN comprises five nodes A, B, C, D, E. The communication network CN further comprises a number of physical links (e.g. fiber optics links) connecting the nodes A, B, C, D, E. Each link may support the propagation of the light at a number of wavelengths. For instance, each link may support the propagation of the light at a number of different wavelengths according to a WDM (Wavelength Division Multiplexing) or DWDM (Dense Wavelength Division Multiplexing) scheme.

Each node A, B, C, D, E comprises a burst transmitter and a burst receiver (not shown in Figure 1). Preferably, the burst transmitter is a fixed-wavelength transmitter capable of transmitting bursts over a fixed-wavelength optical carrier and the burst receiver is a tunable receiver, i.e. it is capable of receiving bursts at any one of the wavelengths supported by the communication network CN. Moreover, each node A, B, C, D, E comprises a number of interfaces (not shown in Figure 1) interfacing the burst transmitter and the burst receiver with the links exiting/entering the node.

Further, preferably, the communication network CN comprises a scheduler (not shown in Figure 1). The scheduler may be implemented as a software module or as an hardware module capable of running a dedicated software. Moreover, the scheduler may be implemented at a single node of the communication network or it may be distributed across a set or all the nodes of the communication network CN. Further, the scheduler may also be implemented as a stand-alone device connected with the nodes of the communication network CN.

Each node A, B, C, D, E is configured to receive data (e.g. packets) from a number of clients of the communication network CN and the burst transmitter is configured to generate data bursts comprising the clients' data at a given wavelength for transmission towards another node of the communication network CN. For example, node A is configured to receive data from a number of clients and its burst transmitter is configured to generate data bursts at a first wavelength $\lambda 1$ and transmit them towards any other node of the communication network CN to which data are destined; node B is configured to receive data from a number of clients and its burst transmitter is configured to generate data bursts at a second wavelength $\lambda 2$ and transmit them towards any other node of the communication network CN to which data are destined; node C is configured to receive data from a number of clients and its burst transmitter is configured to generate data bursts at a third wavelength λ3 and transmit them towards any other node of the communication network CN to which data are destined; node D is configured to receive data from a number of clients and its burst transmitter is configured to generate data bursts at a fourth wavelength λ4 and transmit them towards any other node of the communication network CN to which data are destined, and node E is configured to receive data from a number of clients and its burst transmitter is configured to generate data bursts at a fifth wavelength λ5 and transmit them towards any other node of the communication network CN to which data are destined.

Further, the burst receiver of each node A, B, C, D, E is configured to receive data bursts from the other nodes of the communication network CN at any one of the wavelengths supported by the communication network CN. Each node A, B, C, D, E is then configured to either drop the received data bursts or to forward them to another node.

The burst transmitter of each node A, B, C, D, E is configured to generate data bursts according to a time slotted scheme, i.e. to generate bursts within timeslots T1, ..., TN of fixed duration, e.g. 5 µs, corresponding to a burst duration Tb. In operative conditions, the time instants at which the burst transmitter generates and transmits the data bursts (departure times) are determined according to a schedule computed by the scheduler according to the method of the present invention, as will be described in greater detail herein after.

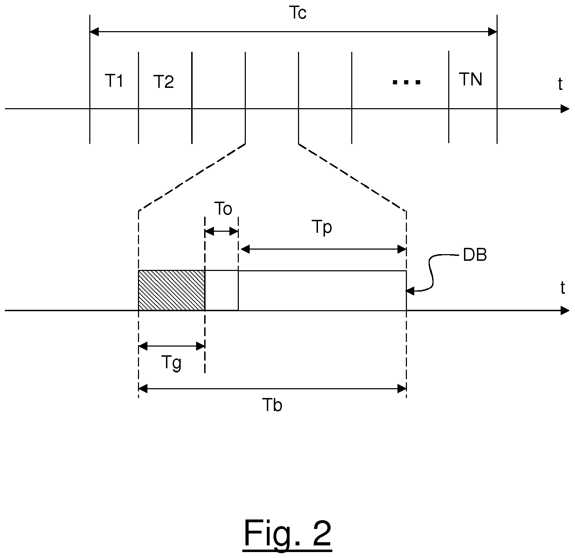

Figure 2 shows the format of a data burst DB. The data burst DB comprises a data burst overhead, of duration To, and a data burst payload, of duration Tp. The data burst duration Tb further preferably comprises a guard interval Tg, prefixed to the data burst overhead, which is the time needed at a node for switching the tunable receiver from one wavelength to another. The guard interval Tg is preferably equal to hundreds of nanoseconds, e.g. 200 ns. During the guard interval Tg, the burst transmitter is configured to transmit a fixed training sequence of data, which is used at a destination node for recovering consecutive data bursts received from different source nodes. The training sequence may also be used to transmit timing information needed for synchronization purposes between a source node and a destination node.

Further, the burst transmitter of each node A, B, C, D, E is configured to generate data bursts directed to a number M of destination nodes within a number N of consecutive timeslots identifying a scheduling period, M and N being integer numbers with M≤N. As shown in Figure 2, the scheduling period has a fixed duration Tc. Scheduling periods repeat cyclically at each node. In operative conditions, within a scheduling period, a number of timeslots are assigned to each source node A, B, C, D, E in order to communicate, i.e. in order to send data bursts, to each destination node.

When a node has no traffic to send to another node of the communication network, its burst transmitter is configured to generate dummy bursts which are then transmitted within the timeslots that are not assigned to any traffic flow. A dummy burst, similarly to a data burst, comprises a training sequence and an overhead. According to a preferred embodiment of the present invention a dummy burst has a duration equal to about 250 ns. In this case, within a timeslot, whose duration is equal to the burst duration Tb, assuming that the burst duration is 5 µs, up to 20 dummy bursts may be transmitted. As it will be explained in greater detail in the following, this choice of the duration of the dummy burst allows a burst receiver of a destination node to tune to different wavelengths during the time not yet assigned to any communication with a source node, in order to calculate the transmission delay according to the method of the present invention.

The burst receiver of each node A, B, C, D, E is configured to receive data bursts according to the a time slotted scheme. In operative conditions, the time instants, or the timeslots, at which the burst receiver receives the data bursts (arrival times) are determined according to a schedule computed by the scheduler according to the method of the present invention, as will be described in greater detail herein after.

Preferably, the nodes A, B, C, D, E of the communication network CN are synchronous, i.e. the nodes A, B, C, D, E have the same clock frequency. Preferably, each node has a clock reference unit which is able to receive a clock synchronization signal from which it may recover a clock frequency to be used in all the internal components of the node. Preferably, one node within the communication network selects a clock synchronization source generating the clock synchronization signal and distributes the clock synchronization signal to all the other nodes of the communication network CN. The clock synchronization source may be selected from a set of predefined sources comprising, for instance, an external primary reference clock (PRC) source. Distribution of the clock synchronization signal is preferably performed by using a dedicated channel of the communication network CN, for example the optical supervisory channel (OSC).

Further, each node A, B, C, D, E has its own time of day, which is common to all the internal components of the node. The burst transmitter of each node A, B, C, D, E is then configured to use the local time of day of the respective node for generating and transmitting the data bursts to the other nodes of the communication network CN, as it will be explained in greater detail herein after.

Operation of the communication network CN comprises the following steps:

- assigning a wavelength to each node A, B, C, D, E of the communication network CN for transmission of data bursts and dummy bursts from the node;
- computing a set of transmission paths across the communication network CN along which to route the data bursts and dummy bursts;
- computing a transmission delay for each source node and destination node pair;
- computing a schedule for the time-slotted transmission of data bursts between the nodes A, B, C, D, E of the communication network CN along the transmission paths. Computation of the schedule is preferably performed at the scheduler by applying a scheduling algorithm. Preferably, the scheduling algorithm is the TIIS algorithm described above;
- reserving the transmission paths; and
- transmitting the data bursts according to the computed schedule along the reserved transmission paths.

Assigning the wavelengths to the nodes is performed by a control element of the communication network CN (not shown in Figure 1) and comprises negotiating the wavelengths amongst the nodes.

Computation of the transmission paths is performed by a control element of the communication network CN (not shown in Figure 1) and comprises selecting, for each source node, a sequence of links to be traversed to reach any possible destination node within the communication network CN. Along a transmission path, the route from a source node to a destination node is unique.

If a protection and/or restoration scheme is implemented within the communication network CN, together with the transmission paths a set of backup paths may be selected.

These preliminary steps will be not described in greater detail since they are not relevant for the present invention.

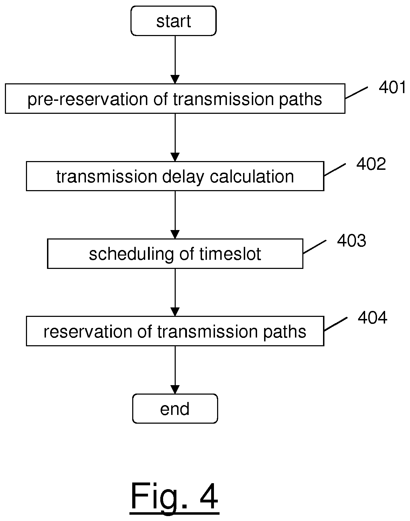

The other steps listed above will be better understood by making reference to the flow chart of Figure 4, illustrating the scheduling operation according to the present invention, and the operation of reserving the transmission paths for the scheduled transmission of the data bursts.

At step 401, the transmission paths are pre-reserved so that each node A, B, C, D, E may start transmitting dummy bursts towards any other node of the communication network CN. Pre-reservation of the transmission paths is preferably carried out by a control element of the communication network CN implementing a reservation protocol such as the RSVP (Resource Reservation Protocol) or via a centralized network management system.

Result of pre-reservation step is that any source node is able to communicate with any possible destination node. In the exemplary communication network CN of Figure 1, once pre-reservation is performed, node A transmits dummy bursts directed to any other node in the communication network CN, i.e. nodes B, C, D, E. Similarly, node B transmits dummy bursts directed to nodes A, C, D, E; node C transmits dummy bursts directed to nodes A, B, D, E; node D transmits dummy bursts directed to nodes A, B, C, E, and node E and transmits dummy bursts directed to nodes A, B, C, D. Since each node has its own time of day, the nodes may start transmitting dummy bursts at different times.

At step 402, the transmission delay associated to each pair of source node and destination node within the communication network CN is calculated.

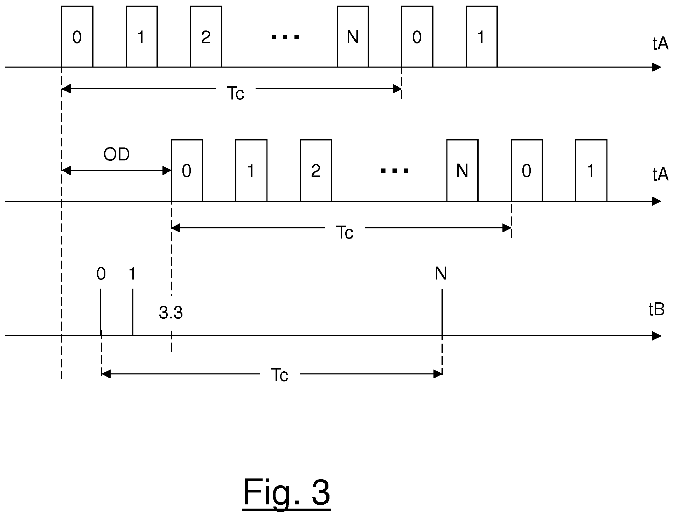

Figure 3 illustrates an example of the delay calculation procedure for a source node and destination node pair of the communication network CN according to the present invention. In this exemplary situation, node A is the source node and node B is the destination node, along a given transmission path. This is merely exemplary, as the following description similarly applies to any pair of source node and destination node of the communication network CN and any of the nodes A, B, C, D, E of Figure 1 could be a source node and a destination node.

The top graph shows a sequence of dummy bursts generated at node A on a time axis, wherein each burst is associated to a respective starting time in terms of the local time of day tA at node A. The top graph also shows a local time reference at node A in terms of the starting time of one scheduling period at node A (also referred to, in the following description and in the claims, as "local scheduling period"), of duration Tc.

Prior to transmitting any dummy burst, node A timestamps the dummy burst with a timestamp information indicative of a local time of departure of the burst from node A. The local time of departure may be measured as a relative local time by taking as reference the starting time of the current local scheduling period. In particular, the local time of departure, and hence the timestamp information added to each burst, may be indicative of the time interval between the time at which the burst is transmitted and the starting time of the current local scheduling period.

Alternatively, the local time of departure may be measured as an absolute local time at node A, and in this case the timestamp information may be indicative of the current time of day at node A at which the burst is transmitted.

In the following description and in the claims, the expression "local time reference" of a node will indicate either the starting time of a scheduling period at the node or the time reference of the time of day at the node.

Preferably, the timestamp information is in units of data burst duration Tb, as it will be explained in greater detail herein after. The timestamp information is preferably inserted within a dedicated field in the overhead of the burst.

Then, node A transmits each time-stamped burst over an optical signal at the first wavelength $\lambda 1$.

In Figure 3, a burst is transmitted within the first timeslot T1 and is time-stamped with "0", a further burst is transmitted within the second timeslot T2 and is time-stamped with "1", and so on.

The middle graph shows the sequence of the bursts received at node B on a time axis representing again the local time of day tA. At node B, the "0" time-stamped burst (i.e. the burst sent in the first timeslot T1 in the exemplary situation depicted in Figure 3) arrives with an overall delay OD with respect to the time at which the burst is transmitted from node A, such overall delay OD being the sum of the propagation delay of the optical signal between node A and node B along the given transmission path, and the additional delay experienced by the optical signal between node A and node B due to chromatic dispersion at the first wavelength $\lambda 1$.

In the bottom graph, it is shown a local time reference of node B in terms of the starting time of a scheduling period. The local time reference at node B is not aligned with the local time reference of node A (indeed, as described above, the nodes of the communication network CN are not necessarily aligned in terms of time of day). Local times at node B are identified by vertical lines surmounted by the integer numbers 0, 1, ..., N. These integer numbers indicate the local times as measured in units of data burst duration Tb with respect to the starting time of the scheduling period.

As it is shown, the "0" time-stamped burst arrives at node B in correspondence of a local time of arrival which is indicated as "3.3", as measured in units of data burst duration Tb with respect to the starting time of the scheduling period at node B. This means that, when the "0" time-stamped burst arrives at node B, node B evaluates the local time of arrival (in units of data burst duration Tb) as a relative local time by measuring the interval between the local time at which the burst is received and the starting time of the current local scheduling period. Alternatively, the local time of arrival may be measured as the time of day at node B at which the burst is received. Then, node B computes the transmission delay as the difference between this local time of arrival and the timestamp information carried by the "0" time-stamped burst.

Hence, according to a preferred embodiment of the present invention, node B calculates the transmission delay with respect to node A by evaluating the local time of arrival of the first time-stamped burst coming from node A as described above and computing the difference between this local time of arrival and the timestamp information carried by the first time-stamped burst received from node A.

Once node B has calculated the transmission delay in the described way, it sends an information indicative of this transmission delay to the scheduler.

It is to be noticed that the transmission delay between node A and node B computed as described above advantageously allows to take into consideration not only the propagation delay between node A and node B but also the additional delay due to the chromatic dispersion at the wavelength used for transmitting bursts from node A to node B. Indeed, the transmission delay between node A and node B, which will be indicated, in the following description, as $\delta_{AB}$, may be expressed by the following equation:

$$\delta_{AB} = PD_{AB} + CDD_{AB}(\lambda 1) \qquad [2]$$

where $PD_{AB}$ is a component dependent on the fixed propagation delay between node A and node B, and $CDD_{AB}(\lambda 1)$ is a component dependent on the chromatic dispersion experienced by the optical signal propagation between node A and node B at the first wavelength $\lambda 1$.

Node B performs the same operations described above with respect to the dummy bursts received from any other source node in the communication network CN, each source node being transmitting dummy bursts at its respective assigned wavelength.

Hence, in the exemplary communication network of Figure 4, at step 402, node B computes a transmission delay $\delta_{AB}$ between node A and node B, a transmission delay $\delta_{CB}$ between node C and node B, a transmission delay $\delta_{DB}$ between node D and node B, and a transmission delay $\delta_{EB}$ between node E and node B. The transmission delay $\delta_{CB}$ takes into account both the propagation delay between node C and node B and the additional delay due to chromatic dispersion at the third wavelength $\lambda 3$. The transmission delay $\delta_{DB}$ takes into account both the propagation delay between node D and node B and the additional delay due to chromatic dispersion at the fourth wavelength $\lambda 4$. The transmission delay $\delta_{EB}$ takes into account both the propagation delay between node E and node B and the additional delay due to chromatic dispersion at the fifth wavelength $\lambda 5$. Each transmission delay is computed along the transmission path connecting the considered nodes.

The transmission delays $\delta_{AB}$, $\delta_{CB}$, $\delta_{DB}$, and $\delta_{EB}$ are all sent by node B to the scheduler. These transmission delays, being computed on a wavelength per wavelength basis, inherently take into account the additional delays due to chromatic dispersion.

In the same way, at step 402 node A computes a transmission delay $\delta_{BA}$ between node B and node A, a transmission delay $\delta_{CA}$ between node C and node A, a transmission delay $\delta_{DA}$ between node D and node A, and a transmission delay $\delta_{EA}$ between node E and node A. The transmission delays $\delta_{BA}$, $\delta_{CA}$, $\delta_{DA}$, and $\delta_{EA}$ are sent by node A to the scheduler.

Further, in the same way, at step 402 node C computes a transmission delay $d_{AC}$ between node A and node C, a transmission delay $d_{BC}$ between node B and node C, a transmission delay $\delta_{DC}$ between node D and node C, and a transmission delay $\delta_{EC}$ between node E and node C. The transmission delays $\delta_{AC}$, $\delta_{BC}$, $\delta_{DC}$, and $\delta_{EC}$ are sent by node C to the scheduler.

Further, in the same way, at step 402 node D computes a transmission delay $d_{AD}$ between node A and node D, a transmission delay $d_{BD}$ between node B and node D, a transmission delay $\delta_{CD}$ between node C and node D, and a transmission delay $\delta_{ED}$ between node E and node D. The transmission delays $\delta_{AD}$, $\delta_{BD}$, $\delta_{CD}$, and $\delta_{ED}$ are sent by node D to the scheduler.

Finally, in the same way, node E computes a transmission delay $\delta_{AE}$ between node A and node E, a transmission delay $\delta_{BE}$ h between node B and node E, a transmission delay $\delta_{CE}$ between node C and node D, and a transmission delay $\delta_{DE}$ between node D and node E. The transmission delays $\delta_{AE}$, $\delta_{BE}$, $\delta_{CE}$, and $\delta_{DE}$ are sent by node E to the scheduler.

The scheduler then uses the received transmission delays to fill in the delay matrix for the scheduling algorithm as follows:

|   | A | B | C | D | E |
|---|---|---|---|---|---|
| A | - | $\delta_{AB}$ | $\delta_{AC}$ | $\delta_{AD}$ | $\delta_{AE}$ |
| B | $\delta_{BA}$ | - | $\delta_{BC}$ | $\delta_{BD}$ | $\delta_{BE}$ |
| C | $\delta_{CA}$ | $\delta_{CB}$ | - | $\delta_{CD}$ | $\delta_{CE}$ |
| D | $\delta_{DA}$ | $\delta_{DB}$ | $\delta_{DC}$ | - | $\delta_{DE}$ |
| E | $\delta_{EA}$ | $\delta_{EB}$ | $\delta_{EC}$ | $\delta_{ED}$ | - |

where the first column comprises the source nodes and the first row comprises the destination nodes.

The transmission delays are computed with an accuracy that depends on the accuracy of the timestamp information inserted within the data or dummy bursts. The accuracy of the timestamp information depends on the clock frequency $f_C$ of the source node. In particular, the accuracy is equal to the clock period $1/f_C$ For instance, if the clock frequency is equal to 200 MHz, an accuracy of 5 ns is achieved.

Indeed, according to a preferred embodiment of the present invention, the timestamp information comprises two integer numbers:

- a first number indicative of the number of burst durations Tb separating the time at which the burst is transmitted from the source node from the starting time of the current scheduling period at the source node; and
- a second number indicative of the number of clock periods separating the time at which the burst is transmitted from the source node from the starting time of the timeslot during which transmission of the burst takes place.

According to the present invention, at the destination node, the local time of arrival of the burst is measured with the same nanosecond accuracy, and hence the transmission delay, which is calculated as the difference between the local time of arrival of the burst at the destination node and the timestamp information carried by the burst, has the same nanosecond accuracy. This can be achieved by implementing both the burst transmitter and the burst receiver of each node within the same integrated circuit (ASIC or FPGA).

Advantageously, the nanosecond accuracy allows to calculate, with the TIIS algorithm, the schedule of timeslots with a high level of precision in order to avoid conflicts at destination.

It is to be noticed that the accuracy achievable with the method of the present invention is not achievable by using, e.g., a synchronization protocol for aligning the time of the day of the nodes, such as the IEEE 1588-2008 synchronization protocol, and then calculating the transmission delay simply by computing the difference between a local timestamp and a timestamp carried by the burst. Indeed, any inaccuracy in such computation of the transmission delays affects the capability of the scheduling algorithm to avoid conflicts either at the source nodes or at the destination nodes. In particular, an accuracy of about ½ of the guard time Tg is required to avoid conflicts, i.e. an accuracy in the order of 100 ns. The time of the day alignment can not provide such an accuracy. As discussed above, as the method of the present invention allows a nanosecond accuracy, the requirement above is advantageously satisfied.

Moreover, the accuracy achieved is not impacted by fixed delays introduced at the source node (e.g. the fixed delay between the time at which the burst is time-stamped and the time at which it is actually sent by the source node).

At step 403, the scheduler computes a schedule on the basis of the delay matrix filled with the transmission delays computed by the nodes A, B, C, D, E at step 402. The computed schedule comprises the times of departure of bursts at the nodes A, B, C, D, E and the times of arrival at all the possible destination nodes A, B, C, D, E.

As already described above, use of the transmission delays computed at step 402 advantageously allows to take into account, in the schedule computed at step 403, both the fixed propagation delays between nodes and the additional delays due to the chromatic dispersion. Indeed, according to the present invention, the transmission delays are computed per wavelength (in particular, each of the transmission delays computed at a destination node is related to a given source node transmitting at a given wavelength) and hence each transmission delay inherently takes into account the chromatic dispersion experienced by the optical signal at the given wavelength.

With the method of the present invention, each destination node may compute the transmission delay on the basis of timestamp information received from the source node, without any exchange of other messages, such as, for instance, OAM (Operation And Maintenance) messages and without using any additional resource in terms of bandwidth. Indeed, the timestamp information is carried directly by the bursts and it is thus in band with the optical signals exchanged between the nodes. This results in a very precise computation of the transmission delay.

Further, the transmission delay computation is not subject to error due to a possible shift during time of the clocks at the source node and the destination node. Indeed, as the nodes have the same clock frequency, any possible shift of the clocks during time is minimized so that the distance in time between the timeslots transmitted by a source node remain constant over time and has the same value at any other node.

Finally, the method of the present invention allows to compute the transmission delays without requiring any alignment of the time of the day throughout the communication network, as only a clock frequency alignment is required.

As a result of step 403, at each node, the timeslots of the scheduling period may be assigned to the transmission of data bursts belonging to traffic flows directed to any other node in the communication network CN according to the computed schedule. Then, at step 404, the transmission paths are reserved on the basis of the schedule computed at step 403, so that each node A, B, C, D. E may actually start transmitting data bursts and dummy bursts according to the calculated schedule.

In case of a protection and/or restoration scheme is implemented within the communication network CN, the operations described above with reference to steps 401-404 are preferably performed not only for the transmission paths but also for he backup paths. Indeed, as the distance between a source node and a destination node along a backup path is likely to be different from the distance between the same source node and the same destination node along a transmission path, the schedule along a backup path is likely to be different from the schedule along a transmission path. In the event of a failure at a node or along a link of a transmission path, communication may be restored along a backup path and using backup scheduled timeslots.

According to the present invention, the transmission delays are constantly evaluated at the destination nodes within the communication network CN. Reference will be made in the following to node B as exemplary destination node, but the same considerations apply to any other node within the communication network CN.

Indeed, after step 404 of the flow-chart of Figure 4, if a traffic flow is to be transmitted from node A to node B, node A starts to send to node B both data bursts and dummy bursts. Dummy bursts are transmitted within the timeslots not assigned to the traffic flow or within the timeslots assigned to the traffic flow but unused. Each burst is time-stamped, according to a preferred embodiment of the present invention.

As described above, at node B, the transmission delay $\delta_{AB}$ is firstly computed on reception of the first time-stamped dummy burst after pre-reservation of the transmission paths (step 401) and then it is sent to the scheduler.

Node B then continues to evaluate the local time of arrival of the bursts, both data bursts and dummy bursts, from node A and continues to compute, for each received burst, a transmission delay as the difference between the local time of arrival of the burst and the timestamp information contained therein. This advantageously allows to keep track of the actual value of the transmission delay, which may be subject to variations due to factors such as environmental conditions. Indeed, the transmission delay may change due to, e.g., temperature changes (day/night/season), pressure changes or ageing.

Similarly, node B continues to evaluate the transmission delays of bursts arriving from any other node within the communication network CN at the wavelengths assigned to such nodes. In the event that a given node in the communication network CN, e.g. node C, transmitting at a third wavelength $\lambda 3$, has not any timeslots assigned to the communication towards node B, node B preferably evaluates, within possibly unassigned timeslots, the data bursts transmitted from node C over the wavelength $\lambda 3$ towards other nodes of the communication network CN. In particular, node B recovers the timestamp information carried by such data bursts at the wavelength $\lambda 3$ and computes a transmission delay relative to the path between node C and node B in the same manner described above.

Moreover, node B, within any unassigned timeslot, may recover the timestamp information carried by dummy bursts transmitted over a number of wavelengths from other nodes of the communication network CN along the transmission paths to which node B belongs. Indeed, the tunable receiver of node B may switch between different wavelengths and therefore receive, within one unassigned timeslot, dummy bursts coming from different source nodes so as to recover the timestamp information related to those different source nodes.

Therefore, advantageously, according to the present invention, each node may continuously evaluate the transmission delays relative to the other nodes in the communication network using the timestamp information contained both in the data bursts and in the dummy bursts. In particular, as the dummy bursts may be up to 20 in a single timeslot, the node may get, within a single unassigned timeslot, the timestamp information related to 20 other nodes. Therefore, use of the dummy bursts according to the present invention allows getting a lot of timestamp information related to different source nodes within few timeslots. This is advantageous especially in case the node is overloaded of traffic coming from certain nodes of the communication network, and the unassigned timeslots during which it may evaluate data or dummy bursts transmitted by the other nodes are few.

Further, preferably, each node compares any subsequently computed value of the transmission delay with the value sent to the scheduler and currently stored into the delay matrix: if the difference between a subsequently computed value and the value sent to the scheduler exceeds a given threshold, the node sends the subsequently computed value to the scheduler. The threshold may be equal to about 25% of the guard interval Tg. Upon reception of a new value of a transmission delay, the scheduler preferably computes a new schedule to take into account the variation.

According to the present invention, the delay matrix at the scheduler is also updated when a new node is inserted within the communication network CN. In this case, after the preliminary step of being assigned a specific not used wavelength, the new node calculates the transmission delays with respect to all the other nodes of the network both along the transmission paths and the possible backup paths. To do so, the new node evaluates the local time of arrival of the bursts, carrying a timestamp information as described above, from the other nodes, both in timeslots assigned to data bursts directed to it and in unassigned timeslots. This allows evaluating the transmission delays of bursts coming from the other nodes over all the wavelengths used within the communication network.

Moreover, the new node starts transmitting bursts carrying a timestamp information as described above, and all the other nodes of the communication network CN calculate the transmission delays with respect to the new node, by evaluating the local time of arrival of the bursts transmitted by the new node at the specific wavelength assigned thereto and computing the difference between such local time of arrival and the timestamp information. Then, the new node and the other nodes send to the scheduler the calculated transmission delays. Upon reception of the transmission delays, the scheduler updates the delay matrix and adds a number of entries corresponding to the transmission delays related to the connections between the new node and the other nodes of the communication network CN. Then the scheduler computes a new schedule on the basis of the updated delay matrix. The new schedule comprises the times of departure of bursts at the nodes A, B, C, D, E and at the new node and the times of arrival at all the possible destination nodes.

The method of the present invention hence allows a dynamic updating of the schedule, which advantageously adapts to changes occurring within the communication network. Indeed, a new schedule is computed by the scheduler once the new/updated transmission delays are sent to it by the nodes. Only updating of the delay matrix is requested for running the scheduling algorithm and getting a new schedule, and this results in a very efficient procedure. Moreover, as already discussed above, since the transmission delays are calculated per wavelength, also the new schedule automatically takes into account any additional delay due to chromatic dispersion.

**Claims**

1. A method for scheduling the transmission of data bursts in an optical burst switching communication network (CN), said communication network (CN) comprising a first source node (A), a second source node (C) and a destination node (B), wherein said first source node (A) is configured to send bursts to said destination node (B) over a first wavelength ($\lambda$1) within one or more timeslots of a local scheduling period at said first source node (A) and wherein said second source node (C) is configured to send bursts to said destination node (B) over a second wavelength ($\lambda$3) within one or more timeslots of a local scheduling period at said second source node (C), said method comprising:

   a) at the first source node (A), time-stamping a first burst with a first timestamp information indicative of a time interval between transmission time of said first burst and starting time of a current local scheduling period of said first source node (A) and, at the second source node (C), time-stamping a second burst with a second timestamp information indicative of a time interval between transmission time of said second burst and starting time of a current local scheduling period of said second source node (C);
   b) at the destination node (B), evaluating a first time of arrival of the first burst by measuring a time interval between reception time of said first burst and starting time of a current local scheduling period of said destination node (B), and a second time of arrival of the second burst by measuring a time interval between reception time of said second burst and starting time of said current local scheduling period of said destination node (B);
   c) at the destination node (B), computing a first transmission delay ($\delta_{AB}$) as a difference between said first time of arrival and said first timestamp information and a second transmission delay ($\delta_{CB}$) as a difference between said second time of arrival and said second timestamp information; and
   d) computing a schedule for the transmission of said data bursts on the basis of said first transmission delay ($\delta_{AB}$) and said second transmission delay ($\delta_{CB}$) received from said destination node (B).

2. The method according to claim 1, wherein said first wavelength ($\lambda$1) is different from said second wavelength ($\lambda$3).

3. The method according to claim 1 or 2 wherein said step d) comprises applying a scheduling algorithm, wherein said scheduling algorithm is a TWIN iterative independent set algorithm.

4. The method according to any of the preceding claims, wherein said schedule comprises times of departure of first data bursts from the first source node (A), times of departure of second data bursts from the second source node (C), and times of arrival of said first and second data bursts at the destination node (B).

5. The method according to any of the preceding claims, wherein at said step a) the first burst and the second burst are dummy bursts, each of said first and second dummy bursts having a shorter duration than a data burst duration (Tb).

6. The method according to any of the preceding claims, wherein said first source node (A), said second source node (C) and said destination node (B) have a respective clock, said clocks having the same frequency.

7. The method according to claim 1, wherein:

- said local time reference at the first source node (A) is the starting time of a current local scheduling period at the first source node (A);
- said local time reference at the second source node (C) is the starting time of a current local scheduling period at the second source node (C);
- each of said first and second timestamp information comprises al least two integer numbers:

    - a first integer number indicative of a time interval, in units of data burst duration (Tb), between said time of departure and said local time reference at the respective source node (A, C); and
    - a second integer number indicative of a further time interval, in units of period of a clock of the respective source node (A, C), between said time of departure and a starting time of a timeslot of the local scheduling period at the respective source node (A, C) during which said first burst and second burst, respectively, is transmitted, and

    - said local time reference at said destination node (B) is the starting time of a current local scheduling period at the destination node (B).

8. The method according to any of the preceding claims, further comprising

    e) at the first source node (A), time-stamping a subsequent further burst with a further timestamp information;
    f) at the destination node (B), evaluating a further time of arrival of the further burst;
    g) at the destination node (B), computing a further transmission delay as a difference between said further time of arrival and said further timestamp information;
    h) at the destination node (B), evaluating whether a difference between said further transmission delay and the first transmission delay ($\delta_{AB}$) exceeds a threshold; and
    i) in the affirmative, computing a further schedule on the basis of said further transmission delay.

9. The method according to claim 8, wherein said threshold is a fraction of a guard interval (Tg) comprised in said data burst duration (Tb).

10. A computer program product comprising computer-executable instructions for performing, when the program is run on at least one computer, the method according to any of the preceding claims.

11. A destination node (B) for an optical burst switching communication network (CN), said destination node (B) being configured to receive a first burst from a first source node (A) of the communication network (CN) and a second burst from a second source node (C) of the communication network (CN), wherein said first source node (A) is configured to send bursts to said destination node (B) over a first wavelength ($\lambda$1) within one or more timeslots of a local scheduling period at said first source node (A) and wherein said second source node (C) is configured to send bursts to said destination node (B) over a second wavelength ($\lambda$3) within one or more timeslots of a local scheduling period at said second source node (C), said destination node (B) being configured to:

    - evaluate a first time of arrival of the first burst by measuring a time interval between reception time of said first burst and starting time of a current local scheduling period of said destination node (B), and a second time of

12

arrival of the second burst by measuring a time interval between reception time of said second burst and starting time of said current local scheduling period of said destination node (B);
- compute a first transmission delay ($\delta_{AB}$) as a difference between said first time of arrival and a first timestamp information comprised in said first burst, said first timestamp information being indicative of a time interval between transmission time of said first burst and starting time of a current local scheduling period of said first source node (A), and a second transmission delay ($\delta_{CB}$) as a difference between said second time of arrival and a second timestamp information comprised in said second burst, said second timestamp information being indicative of a time interval between transmission time of said second burst and starting time of a current local scheduling period of said second source node (C).

12. A communication network (CN) comprising at least two source nodes (A, C) and a destination node (B) according to claim 11.

13. The communication network (CN) according to claim 12, wherein said communication network (CN) is an optical burst switching network.


**Patentansprüche**

1. Verfahren für die Zeitplanung für die Übertragung von Daten-Bursts in einem optischen Burst-Switching-Kommunikationsnetzwerk (Communication Network, CN), wobei besagtes Kommunikationsnetzwerk (CN) einen ersten Quellknoten (A), einen zweiten Quellknoten (C) und einen Zielknoten (B) umfasst, wobei besagter erster Quellknoten (A) konfiguriert, um über eine erste Wellenlänge ($\lambda 1$) in einem oder mehreren Zeitschlitzen einer lokalen Zeitplanungsperiode an besagtem erstem Quellknoten (A) Bursts an besagten Zielknoten (B) zu senden, und wobei besagter zweiter Quellknoten (C) dafür konfiguriert ist, um über eine zweite Wellenlänge ($\lambda 3$) innerhalb eines oder mehrerer Zeitschlitze einer lokalen Zeitplanungsperiode an besagtem zweitem Quellknoten (C) Bursts an besagten Zielknoten (B) zu senden, wobei besagtes Verfahren umfasst:

a) an dem ersten Quellknoten (A) das Zeitstempeln eines ersten Bursts mit einer ersten Zeitstempelinformation, die ein Zeitintervall zwischen dem Übertragungszeitpunkt besagten ersten Bursts und dem Startzeitpunkt einer laufenden lokalen Zeitplanungsperiode besagten ersten Quellknotens (A) anzeigt, und an dem zweiten Quellknoten (C) das Zeitstempeln eines zweiten Bursts mit einer zweiten Zeitstempelinformation, die ein Zeitintervall zwischen dem Übertragungszeitpunkt besagten zweiten Bursts und dem Startzeitpunkt einer laufenden lokalen Zeitplanungsperiode besagten zweiten Quellknotens (C) anzeigt;
b) an dem Zielknoten (B) das Evaluieren einer ersten Ankunftszeit des ersten Bursts durch das Messen eines Zeitintervalls zwischen dem Empfangszeitpunkt besagten ersten Bursts und der Startzeit einer laufenden lokalen Zeitplanungsperiode besagten Zielknotens (B), und das Evaluieren einer zweiten Ankunftszeit des zweiten Bursts durch das Messen eines Zeitintervalls zwischen dem Empfangszeitpunkt besagten zweiten Bursts und der Startzeit der besagten, laufenden lokalen Zeitplanungsperiode besagten Zielknotens (B);
c) an dem Zielknoten (B) das Berechnen einer ersten Übertragungsverzögerung ($\delta_{Aß}$) als Differenz zwischen besagter erster Ankunftszeit und besagter erster Zeitstempelinformation sowie einer zweiten Übertragungsverzögerung ($\delta_{CB}$) als Differenz zwischen besagter zweiter Ankunftszeit und besagter zweiter Zeitstempelinformation; und
d) das Berechnen eines Zeitplans für die Übertragung besagter Daten-Bursts auf der Basis besagter erster Übertragungsverzögerung ($\delta_{AB}$) und besagter zweiter Übertragungsverzögerung ($\delta_{CB}$), die von besagtem Zielknoten (B) empfangen werden.

2. Das Verfahren nach Anspruch 1, wobei sich besagte erste Wellenlänge ($\lambda 1$) von besagter zweiter Wellenlänge ($\lambda 3$) unterscheidet.

3. Das Verfahren nach Anspruch 1 oder 2, wobei besagter Schritt d) die Anwendung eines Zeitplanungsalgorithmus umfasst, wobei besagter Zeitplanungsalgorithmus ein iterativer Algorithmus mit unabhängigen Mengen für TWIN-Architekturen ist.

4. Das Verfahren nach einem jeglichen der vorgenannten Ansprüche, wobei besagte Zeitplanung Ausgangszeitpunkte von ersten Daten-Bursts aus dem ersten Quellknoten (A), Ausgangszeitpunkte von zweiten Daten-Bursts aus dem zweiten Quellknoten (C) und Ankunftszeiten besagten ersten und besagten zweiten Daten-Bursts am Zielknoten (B) umfasst.

**5.** Das Verfahren nach einem jeglichen der vorgenannten Ansprüche, wobei in besagtem Schritt a) der erste Burst und der zweite Burst Dummy-Bursts sind, wobei sowohl der erste als auch der zweite Dummy-Burst eine kürzere Dauer haben, als eine Daten-Burst-Zeitdauer (Tb).

**6.** Das Verfahren nach einem jeglichen der vorgenannten Ansprüche, wobei besagter erster Quellknoten (A), besagter zweiter Quellknoten (C) und besagter Zielknoten (B) jeweils Taktgeber haben, wobei besagte Taktgeber dieselbe Frequenz haben.

**7.** Verfahren nach Anspruch 1, wobei:

- besagte lokale Zeitreferenz an dem ersten Quellknoten (A) die Startzeit einer laufenden lokalen Zeitplanungsperiode am ersten Quellknoten (A) ist;
- besagte lokale Zeitreferenz an dem zweiten Quellknoten (C) die Startzeit einer laufenden lokalen Zeitplanungsperiode am zweiten Quellknoten (C) ist;
- wobei sowohl die erste als auch die zweite Zeitstempelinformation mindestens zwei ganze Zahlen umfasst:

- eine erste ganze Zahl, die in Einheiten der Daten-Burst-Zeitdauer (Tb) ein Zeitintervall zwischen besagtem Ausgangszeitpunkt und besagter lokaler Zeitreferenz an dem jeweiligen Quellknoten (A, C) anzeigt; und
- ein zweite ganze Zahl, die in Einheiten einer Taktperiode eines entsprechenden Quellknotens (A, C) ein weiteres Zeitintervall zwischen besagtem Ausgangszeitpunkt und einer Startzeit eines Zeitschlitzes der lokalen Zeitplanungsperiode an dem entsprechenden Quellknoten (A, C) anzeigt, im Verlauf dessen besagter erster Burst und besagter zweiter Burst jeweils übermittelt werden, und

- wobei besagte lokale Zeitreferenz an besagtem Zielknoten (B) die Startzeit einer laufenden lokalen Zeitplanungsperiode am Zielknoten (B) ist;

**8.** Das Verfahren nach einem beliebigen der vorstehenden Ansprüche, weiterhin umfassend:

e) an dem ersten Quellknoten (A) das Zeitstempeln eines nachfolgenden weiteren Burst mit einer weiteren Zeitstempelinformation;
f) am Zielknoten (B) das Evaluieren einer weiteren Ankunftszeit des weiteren Bursts;
g) am Zielknoten (B) das Berechnen einer weiteren Übertragungsverzögerung als Differenz zwischen besagter weiterer Ankunftszeit und besagter weiterer Zeitstempelinformation;
h) am Zielknoten (B) das Evaluieren, ob eine Differenz zwischen besagter weiterer Übertragungsverzögerung und der ersten Übertragungsverzögerung ($\delta_{AB}$) einen Grenzwert überschreitet; und
i) falls dem so ist, das Berechnen einer weiteren Zeitplanung auf der Grundlage besagter weiterer Übertragungsverzögerung.

**9.** Das Verfahren nach Anspruch 8, wobei besagter Grenzwert ein Anteil an einem Schutzintervall (Tg) ist, welches in besagter Daten-Burst-Zeitdauer (Tb) enthalten ist.

**10.** Computerprogramm-Produkt mit computerausführbaren Befehlen zum Durchführen des Verfahrens nach einem beliebigen der vorstehenden Ansprüche, wenn das Programm auf mindestens einem Computer läuft.

**11.** Zielknoten (B) für ein optisches Burst-Switching-Kommunikationsnetzwerk (CN), wobei besagter Zielknoten (B) konfiguriert ist für den Empfang eines ersten Bursts von einem ersten Quellknoten (A) des Kommunikationsnetzwerks (CN) und eines zweiten Bursts von einem zweiten Quellknoten (C) des Kommunikationsnetzwerks (CN), wobei besagter erster Quellknoten (A) konfiguriert, um über eine erste Wellenlänge ($\lambda$1) in einem oder mehreren Zeitschlitzen einer lokalen Zeitplanungsperiode an besagtem erstem Quellknoten (A) Bursts an besagten Zielknoten (B) zu senden, und wobei besagter zweiter Quellknoten (C) dafür konfiguriert ist, um über eine zweite Wellenlänge ($\lambda$3) innerhalb eines oder mehrerer Zeitschlitze einer lokalen Zeitplanungsperiode an besagtem zweitem Quellknoten (C) Bursts an besagten Zielknoten (B) zu senden, wobei besagter Zielknoten (B) konfiguriert ist für:

- das Evaluieren einer ersten Ankunftszeit des ersten Bursts durch das Messen eines Zeitintervalls zwischen dem Empfangszeitpunkt besagten ersten Bursts und der Startzeit einer laufenden lokalen Zeitplanungsperiode besagten Zielknotens (B), und das Evaluieren einer zweiten Ankunftszeit des zweiten Bursts durch das Messen eines Zeitintervalls zwischen dem Empfangszeitpunkt besagten zweiten Bursts und der Startzeit der besagten, laufenden lokalen Zeitplanungsperiode besagten Zielknotens (B);

- das Berechnen einer ersten Übertragungsverzögerung ($\delta_{AB}$) als Differenz zwischen besagter erster Ankunftszeit und einer ersten, in besagtem erstem Burst enthaltenen Zeitstempelinformation, wobei besagte erste Zeitstempelinformation ein Zeitintervall zwischen dem Übertragungszeitpunkt besagten ersten Bursts und dem Startzeitpunkt einer laufenden lokalen Zeitplanungsperiode besagten ersten Quellknotens (A) anzeigt, und das Berechnen einer zweiten Übertragungsverzögerung ($\delta_{CB}$) als Differenz zwischen besagter zweiter Ankunftszeit und einer zweiten, in besagtem erstem Burst enthaltenen Zeitstempelinformation, wobei besagte zweite Zeitstempelinformation ein Zeitintervall zwischen dem Übertragungszeitpunkt besagten zweiten Bursts und dem Startzeitpunkt einer laufenden lokalen Zeitplanungsperiode besagten zweiten Quellknotens (C) anzeigt.

12. Kommunikationsnetzwerk (CN), mindestens zwei Quellknoten (A, C) und einen Zielknoten (B) nach Anspruch 11 umfassend.

13. Das Kommunikationsnetzwerk (CN) nach Anspruch 12, wobei besagtes Kommunikationsnetzwerk (CN) ein optisches Burst-Switching-Netzwerk ist.

**Revendications**

1. Procédé pour ordonnancer la transmission de rafales de données dans un réseau de communication à commutation optique par rafales (CN), ledit réseau de communication (CN) comprenant un premier noeud source (A), un second noeud source (C) et un noeud de destination (B), ledit premier noeud source (A) étant configuré pour envoyer des rafales audit noeud de destination (B) sur une première longueur d'onde ($\lambda$1) à l'intérieur d'un ou plusieurs créneaux temporels d'une période d'ordonnancement locale au niveau dudit premier noeud source (A) et ledit second noeud source (C) étant configuré pour envoyer des rafales audit noeud de destination (B) sur une seconde longueur d'onde ($\lambda$3) à l'intérieur d'un ou plusieurs créneaux temporels d'une période d'ordonnancement locale au niveau dudit second noeud source (C), ledit procédé comprenant les étapes suivantes :

   a) au niveau du premier noeud source (A), horodater une première rafale avec une première information d'estampille temporelle indicative d'un intervalle de temps entre un temps de transmission de ladite première rafale et un temps de début d'une période d'ordonnancement locale actuelle dudit premier noeud source (A) et, au niveau du second noeud source (C), horodater une seconde rafale avec une seconde information d'estampille temporelle indicative d'un intervalle de temps entre un temps de transmission de ladite seconde rafale et un temps de début d'une période d'ordonnancement locale actuelle dudit second noeud source (C) ;
   b) au niveau du noeud de destination (B), évaluer un premier temps d'arrivée de la première rafale en mesurant un intervalle de temps entre un temps de réception de ladite première rafale et un temps de début d'une période d'ordonnancement locale actuelle dudit noeud de destination (B), et un second temps d'arrivée de la seconde rafale en mesurant un intervalle de temps entre un temps de réception de ladite seconde rafale et un temps de début de ladite période d'ordonnancement locale actuelle dudit noeud de destination (B) ;
   c) au niveau du noeud de destination (B), calculer un premier délai de transmission ($\delta_{AB}$) comme une différence entre ledit premier temps d'arrivée et ladite première information d'estampille temporelle et un second délai de transmission ($\delta_{CB}$) comme une différence entre ledit second temps d'arrivée et ladite seconde information d'estampille temporelle; et
   d) calculer un plan d'ordonnancement pour la transmission desdites rafales de données sur la base dudit premier délai de transmission ($\delta_{AB}$) et dudit second délai de transmission ($\delta_{CB}$) reçus en provenance dudit noeud de destination (B).

2. Procédé selon la revendication 1, dans lequel ladite première longueur d'onde ($\lambda$1) est différente de ladite seconde longueur d'onde ($\lambda$3).

3. Procédé selon la revendication 1 ou 2, dans lequel ladite étape d) comprend l'application d'un algorithme d'ordonnancement, ledit algorithme d'ordonnancement étant un algorithme d'ensemble indépendant itératif TWIN.

4. Procédé selon l'une quelconque des revendications précédentes, dans lequel ledit plan d'ordonnancement comprend des temps de départ de premières rafales de données en provenance du premier noeud source (A), des temps de départ de secondes rafales de données en provenance du second noeud source (C), et des temps d'arrivée desdites premières et secondes rafales de données au niveau du noeud de destination (B).

5. Procédé selon l'une quelconque des revendications précédentes, dans lequel à ladite étape a) la première rafale et la seconde rafale sont des rafales fictives, chacune desdites première et seconde rafales fictives ayant une durée plus courte qu'une durée de rafale de données (Tb).

6. Procédé selon l'une quelconque des revendications précédentes, dans lequel ledit premier noeud source (A), ledit second noeud source (C) et ledit noeud de destination (B) ont une horloge respective, lesdites horloges ayant la même fréquence.

7. Procédé selon la revendication 1, dans lequel :

- ladite référence temporelle locale au niveau du premier noeud source (A) est le temps de début d'une période d'ordonnancement locale actuelle au niveau du premier noeud source (A) ;
- ladite référence temporelle locale au niveau du second noeud source (C) est le temps de début d'une période d'ordonnancement locale actuelle au niveau du second noeud source (C) ;
- chacune desdites première et seconde informations d'estampille temporelle comprend au moins deux nombres entiers :

- un premier nombre entier indicatif d'un intervalle de temps, en unités de durée de rafale de données (Tb), entre ledit temps de départ et ladite référence temporelle locale au niveau du noeud source respectif (A, C) ; et
- un second nombre entier indicatif d'un intervalle de temps supplémentaire, en unités de période d'une horloge du noeud source respectif (A, C), entre ledit temps de départ et un temps de début d'un créneau temporel de la période d'ordonnancement locale au niveau du noeud source respectif (A, C) au cours duquel lesdites première rafale et seconde rafale, respectivement, sont transmises, et

- ladite référence temporelle locale au niveau dudit noeud de destination (B) est le temps de début d'une période d'ordonnancement locale actuelle au niveau du noeud de destination (B).

8. Procédé selon l'une quelconque des revendications précédentes, comprenant en outre les étapes suivantes

e) au niveau du premier noeud source (A), horodater une rafale supplémentaire subséquente avec une information d'estampille temporelle supplémentaire ;
f) au niveau du noeud de destination (B), évaluer un temps d'arrivée supplémentaire de la rafale supplémentaire ;
g) au niveau du noeud de destination (B), calculer un délai de transmission supplémentaire comme une différence entre ledit temps d'arrivée supplémentaire et ladite information d'estampille temporelle supplémentaire ;
h) au niveau du noeud de destination (B), évaluer si une différence entre ledit délai de transmission supplémentaire et le premier délai de transmission ($\delta_{AB}$) dépasse un seuil ; et
i) dans l'affirmative, calculer un plan d'ordonnancement supplémentaire sur la base dudit délai de transmission supplémentaire.

9. Procédé selon la revendication 8, dans lequel ledit seuil est une fraction d'un intervalle de garde (Tg) compris dans ladite durée de rafale de données (Tb).

10. Produit de programme informatique comprenant des instructions exécutables par ordinateur pour effectuer, lorsque le programme est exécuté sur au moins un ordinateur, le procédé selon l'une quelconque des revendications précédentes.

11. Noeud de destination (B) pour un réseau de communication à commutation optique par rafales (CN), ledit noeud de destination (B) étant configuré pour recevoir une première rafale en provenance d'un premier noeud source (A) du réseau de communication (CN) et une seconde rafale en provenance d'un second noeud source (C) du réseau de communication (CN), ledit premier noeud source (A) étant configuré pour envoyer des rafales audit noeud de destination (B) sur une première longueur d'onde ($\lambda$1) à l'intérieur d'un ou plusieurs créneaux temporels d'une période d'ordonnancement locale au niveau dudit premier noeud source (A) et ledit second noeud source (C) étant configuré pour envoyer des rafales audit noeud de destination (B) sur une seconde longueur d'onde ($\lambda$3) à l'intérieur d'un ou plusieurs créneaux temporels d'une période d'ordonnancement locale au niveau dudit second noeud source (C), ledit noeud de destination (B) étant configuré pour :

- évaluer un premier temps d'arrivée de la première rafale en mesurant un intervalle de temps entre un temps de réception de ladite première rafale et un temps de début d'une période d'ordonnancement locale actuelle

EP 2 782 273 B1

dudit noeud de destination (B), et un second temps d'arrivée de la seconde rafale en mesurant un intervalle de temps entre un temps de réception de ladite seconde rafale et un temps de début de ladite période d'ordonnancement locale actuelle dudit noeud de destination (B) ;

- calculer un premier délai de transmission ($\delta_{AB}$) comme une différence entre ledit premier temps d'arrivée et une première information d'estampille temporelle comprise dans ladite première rafale, ladite première information d'estampille temporelle étant indicative d'un intervalle de temps entre un temps de transmission de ladite première rafale et un temps de début d'une période d'ordonnancement locale actuelle dudit premier noeud source (A), et un second délai de transmission ($\delta_{CB}$) comme une différence entre ledit second temps d'arrivée et une seconde information d'estampille temporelle comprise dans ladite seconde rafale, ladite seconde information d'estampille temporelle étant indicative d'un intervalle de temps entre un temps de transmission de ladite seconde rafale et un temps de début d'une période d'ordonnancement locale actuelle dudit second noeud source (C).

12. Réseau de communication (CN) comprenant au moins deux noeuds source (A, C) et un noeud de destination (B) selon la revendication 11.

13. Réseau de communication (CN) selon la revendication 12, dans lequel ledit réseau de communication (CN) est un réseau à commutation optique par rafales.

Fig. 1

Fig. 2

EP 2 782 273 B1

## Fig. 3

EP 2 782 273 B1

start

pre-reservation of transmission paths — 401

transmission delay calculation — 402

scheduling of timeslot — 403

reservation of transmission paths — 404

end

## Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7283552 B

**Non-patent literature cited in the description**

- **C. QIAO ; M. YOO.** Optical Burst Switching (OBS) - A new paradigm for an optical Internet. *Journal High Speed Networks,* 1999, vol. 8, 69-84